Europäisches Patentamt

European Patent Office

Office européen des brevets

(19)

(11) **EP 0 751 594 B1**

(12) # FASCICULE DE BREVET EUROPEEN

(45) Date de publication et mention
de la délivrance du brevet:
**06.10.1999 Bulletin 1999/40**

(51) Int Cl.⁶: **H01S 3/06**, H01S 3/121

(21) Numéro de dépôt: **96401398.1**

(22) Date de dépôt: **25.06.1996**

(54) **Cavité microlaser et microlaser solide impulsionnel à déclenchement actif par micromodulateur**

Festkörpermikrolaser mit aktiver Güteschaltung durch einer Mikromodulator

Solid state microlaser, actively Q-switched by a micromodulator

(84) Etats contractants désignés:
**DE GB IT**

(30) Priorité: **27.06.1995 FR 9507716**

(43) Date de publication de la demande:
**02.01.1997 Bulletin 1997/01**

(73) Titulaire: **COMMISSARIAT A L'ENERGIE ATOMIQUE**
**75015 Paris (FR)**

(72) Inventeurs:
- **Thony, Philippe**
  **38000 Grenoble (FR)**
- **Rabarot, Marc**
  **38170 Seyssinet (FR)**
- **Molva, Engin**
  **38000 Grenoble (FR)**

(74) Mandataire: **Dubois-Chabert, Guy et al**
**Société de Protection des Inventions**
**3, rue du Docteur Lanceraux**
**75008 Paris (FR)**

(56) Documents cités:
**EP-A- 0 653 824**         **WO-A-94/14215**

- **PATENT ABSTRACTS OF JAPAN vol. 012, no. 375 (E-666), 7 Octobre 1988 & JP-A-63 124480 (NEC CORP), 27 Mai 1988,**
- **OPTICS LETTERS, vol. 17, no. 17, pages 1201-1203, XP000293919 ZAYHOWSKI J J ET AL: "DIODE-PUMPED MICROCHIP LASERS ELECTRO-OPTICALLY Q SWITCHED AT HIGH PULSE REPETITION RATES"**
- **OPTICS LETTERS, vol. 17, no. 5, 1 Mars 1992, pages 378-380, XP000248813 SCHILLER S: "FUSED-SILICA MONOLITHIC TOTAL-INTERNAL-REFLECTION RESONATOR"**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

### Domaine technique

L'invention se rapporte au domaine des microlasers solides déclenchés.

Un des intérêts du microlaser réside dans sa structure en un empilement de multicouches. Le milieu actif laser est constitué par un matériau de faible épaisseur (entre 150-1000 µm) et de petites dimensions (quelques mm$^2$), sur lequel des miroirs diélectriques de cavité sont directement déposés. Ce milieu actif peut être pompé par une diode laser III-V qui est soit directement hybridée sur le microlaser, soit couplée à ce dernier par fibre optique. La possibilité d'une fabrication collective utilisant les moyens de la microélectronique autorise une production de masse de ces microlasers à très faible coût.

Les microlasers ont de nombreuses applications, dans des domaines aussi variés que l'industrie automobile, l'environnement, l'instrumentation scientifique, la télémétrie.

### Etat de l'art antérieur

Les microlasers connus ont en général une émission continue de quelques dizaines de mW de puissance. Cependant, la plupart des applications citées ci-dessus, nécessitent des puissances crêtes (puissance instantanée) de quelques kW délivrées pendant $10^{-8}$ à $10^{-9}$ secondes, avec une puissance moyenne de quelques dizaines de mW.

Dans les lasers solides, on peut obtenir de telles puissances crêtes élevées en les faisant fonctionner en mode pulsé à des fréquences variant entre 10 et $10^4$ Hz. Pour cela, on utilise des procédés de déclenchement de la cavité.

Une cavité laser macroscopique peut être déclenchée de manière active ou passive.

Dans le cas d'un déclenchement actif, la valeur des pertes est pilotée de façon externe par l'utilisateur, par exemple par un miroir de cavité tournant, par des moyens acousto-optiques ou électro-optiques. La durée de stockage, l'instant d'ouverture de la cavité ainsi que le taux de répétition peuvent être choisis séparément.

Dans le domaine des microlasers, une technique de déclenchement actif est décrite dans l'article de J.J. Zayhowski et al., intitulé "Diode-pumped microchip lasers electro-optically Q-switched at high pulse repetition rates", paru dans Optics letters, vol. 17, N°17, pp. 1201-1203, (1992).

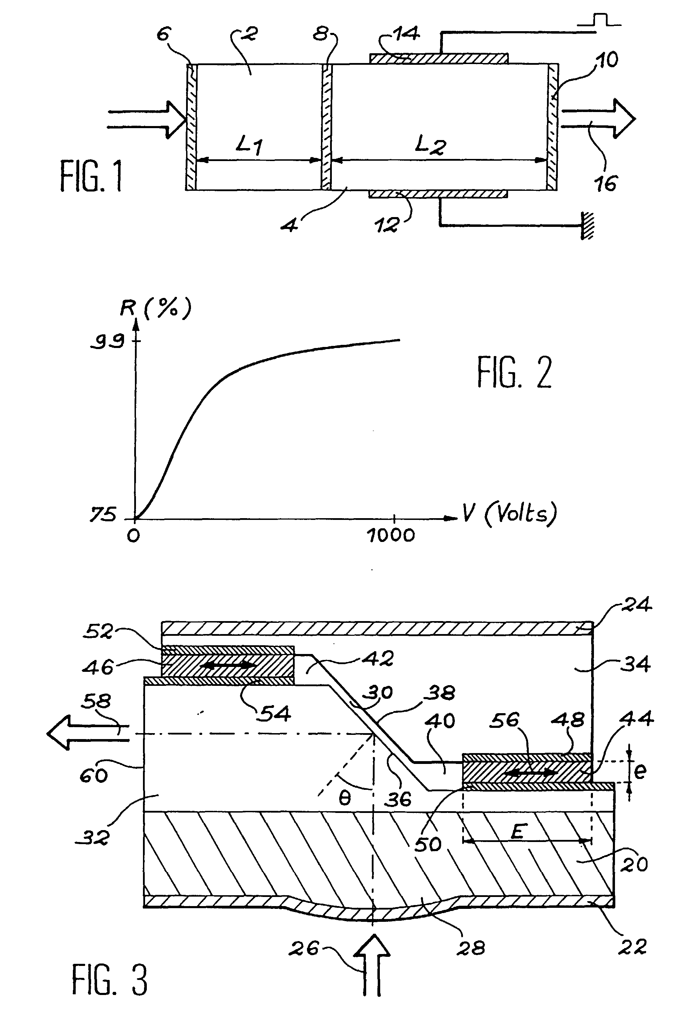

Dans ce document, le déclenchement est réalisé dans une configuration de deux cavités Fabry-Perot couplées. Un tel ensemble est illustré sur la figure 1, où la référence 2 désigne le milieu actif laser et la référence 4 un matériau électro-optique déclencheur (LiTaO$_3$). Le milieu actif 2 du laser forme, avec un miroir d'entrée 6 et un miroir intermédiaire 8 une première cavité Fabry-Perot. Le matériau déclencheur forme, avec le miroir intermédiaire 8 et le miroir de sortie 10, une deuxième cavité Fabry-Perot. Le déclenchement se fait en modifiant la longueur optique du matériau déclencheur 4 par une action externe ; des électrodes de déclenchement 12, 14 sont placées perpendiculairement à l'axe du faisceau laser 16 de part et d'autre du matériau 4. Si une tension V est appliquée entre ces électrodes, un champ électrique E=V/e, où e est la distance entre les électrodes (ce qui correspond à l'épaisseur du matériau électro-optique) en résulte. L'indice optique $n_2$, et par conséquent la longueur optique $n_2 L_2$, du matériau électro-optique est modifié par l'action du champ E. Ceci affecte le couplage des cavités et modifie la réflectivité de la cavité Fabry-Pérot formée par les miroirs 8 et 10 et par le matériau déclencheur 4, vue par le milieu laser.

Pour un microlaser YAG:Nd émettant vers 1,06 µm et un matériau déclencheur constitué par du LiTaO$_3$ d'épaisseur environ égale à 1 mm, on a typiquement : $n_1=1,8$, $n_2=2$, $L_1=500$ µm, $L_2=900$µm. La variation maximum de réflectivité de la deuxième cavité est obtenue pour $d\lambda/\lambda=dL_2/L_2=dn_2/n_2=10^{-4}$ environ. Cette variation d'indice est obtenue en appliquant un champ électrique de $10^4$ volts/cm environ dans le matériau déclencheur. Il est possible d'assimiler la deuxième cavité (électro-optique) à un miroir de sortie de la première cavité constituée du matériau laser. La réflectivité de ce miroir de sortie est variable et commandée par la tension de commande externe appliquée aux électrodes 12, 14. La figure 2 montre la variation de la réflectivité R de la deuxième cavité en fonction de la tension V appliquée. Pour le cas où les trois miroirs 6, 8, 10 ont des réflectivités respectivement égales à 99%, 95% et 50%, la réflectivité de la deuxième cavité va varier entre 75% et 99%. Ainsi, pour le milieu actif ceci revient à faire varier la réflectivité du miroir de sortie entre 75% et 99%, par une commande de tension externe. En fait, on voit d'après le diagramme de la figure 2 qu'il faut appliquer plusieurs centaines de volts pour obtenir une réflectivité voisine de 90% et qu'il faut appliquer environ 1000 volts pour obtenir une réflectivité de l'ordre de 99%, et ceci pour une distance inter-électrodes de 1mm.

Ce type de microlasers présente des problèmes qui en empêchent l'utilisation en pratique.

Tout d'abord, le microlaser est fabriqué par un procédé manuel (il met en oeuvre des étapes de collage de morceaux prédécoupés). Ceci impose une limite inférieure pour les dimensions géométriques qui sont au minimum autour de 1mm, et en particulier pour la distance entre les deux électrodes. En outre, un autre problème est la nécessité d'atteindre un champ E suffisant pour le déclenchement. Il est en effet nécessaire d'appliquer une tension de l'ordre de 1000 volts entre les deux électrodes, et ceci en un temps très court (moins de 1 nanoseconde) et sur des puces laser d'environ 1mm$^3$ de volume. Ceci est très difficile à réaliser en pratique et nécessite une électronique sophistiquée incompatible avec la simplicité et le bas coût de production du microlaser.

De plus ce type de dispositif est limité à un fonctionnement déclenché standard, c'est-à-dire avec extraction de l'impulsion du microlaser au travers du miroir de sortie de la cavité résonnante. Ceci se traduit par une perte optique supplémentaire dans la cavité microlaser, et par une limitation sur le couplage de l'énergie dans le faisceau à l'extérieur de la cavité, donc par une efficacité doublement limitée.

Patent Abstracts of Japan, vol.012, no.375 (E-666), 7 Octobre 1988; & JP-A-63124480 décrit une cavité laser à déclenchement actif comportant un modulateur à réflexion totale interne frustrée comportant deux prismes constitués d'un certain matériau possédant chacun au moins une face plane, les deux faces planes étant sensiblement parallèles entre elles et inclinées sur l'axe de la cavité laser, définissant ainsi une lame (écartement "d") ayant un indice inférieur à l'indice du matériau des prismes.

Exposé de l'invention

L'invention a pour objet un microlaser monolithique à déclenchement actif, comme défini dans la revendication 1 comportant :

- un milieu actif solide,
- un miroir d'entrée et un miroir de sortie délimitant la cavité microlaser,
- un micromodulateur à réflexion totale interne frustrée, comportant deux faces sensiblement parallèles entre elles et inclinées sur l'axe du laser,
- des moyens pour faire varier la distance entre ces deux faces sensiblement parallèles.

Les signaux électriques de commande de ce nouveau dispositif sont assez faibles (de l'ordre de quelques dizaines de volts à quelques centaines de volts), du fait d'une part des faibles déplacements à faire effectuer aux faces du micromodulateur et d'autre part à la faible masse des éléments mis en jeu dans un micromodulateur à réflexion totale interne frustrée.

En outre, la cavité microlaser obtenue ne nécessite aucune opération d'alignement optique ultérieure par l'utilisateur, du fait de son caractère monolithique.

Les coûts de fabrication d'un microlaser incorporant une telle cavité microlaser sont réduits car la structure décrite ci-dessus est compatible avec un procédé de fabrication collectif, du type de ceux utilisés en microélectronique.

Le caractère monolithique du dispositif implique aussi une bonne fiabilité.

Ce type de microlaser est mieux adapté à la fabrication collective que les microlasers déclenchés existants. En effet, il n'y a pas d'étape de collage nécessaire, car le micromodulateur peut être obtenu par dépôt d'un matériau choisi pour sa bonne qualité optique et son indice.

Enfin, ce type de dispositif permet d'éviter l'utilisation, en sortie de cavité microlaser, d'un miroir présentant une certaine transmission : ce miroir peut être remplacé par un miroir à réflexion maximum et ceci permet de supprimer une source de perte à l'intérieur de la cavité microlaser.

Dans un microlaser selon l'invention, le micromodulateur comporte deux dioptres inclinés travaillant en réflexion totale et réalisés, par exemple, par deux prismes séparés par au moins un intervalle, les moyens pour faire varier la distance entre les deux faces sensiblement parallèles et inclinées sur l'axe du laser étant essentiellement situés dans cet intervalle.

Cette disposition permet de réaliser une structure extrêmement compacte.

Les moyens pour faire varier la distance entre les deux faces peuvent être des moyens piézoélectriques. De façon avantageuse, le modulateur comporte alors deux prismes séparés par au moins un intervalle, les moyens piézoélectriques comportant au moins un cristal piézoélectrique essentiellement situé dans l'intervalle entre les deux prismes (dioptres).

Dans le cas où le cristal piézoélectrique est situé dans l'intervalle entre les deux prismes, des électrodes de polarisation du cristal peuvent être positionnées de part et d'autre de ce cristal, chacune de ces électrodes étant située en surface d'un des deux prismes (dioptres).

Avantageusement, le matériau piézoélectrique a un coefficient de tenseur piézoélectrique $d_{15}$ important. Ceci permet d'utiliser un matériau de faible épaisseur.

Avantageusement, les deux faces sensiblement parallèles entre elles et inclinées sur l'axe du laser sont chacune prolongées, de part et d'autre, par deux faces planes, disposées perpendiculairement à l'axe du faisceau laser.

Selon un autre mode de réalisation, les moyens pour faire varier la distance entre les faces peuvent être des moyens électrostatiques.

Dans ce cas le modulateur comporte deux prismes séparés par au moins un intervalle et reliés par un point fixe, les moyens électrostatiques comportant deux électrodes, chaque électrode étant positionnée en surface d'un des deux prismes, de part et d'autre de l'intervalle.

On obtient ainsi un micromodulateur dont les éléments de commande peuvent être réalisés extrêmement facilement, à très faible coût.

Selon une variante, l'un des deux prismes peut être muni d'une micropoutre sur une partie de laquelle une des électrodes est déposée.

Ceci permet de bénéficier d'une plus grande surface d'électrode, et donc de réaliser plus facilement le déplacement des deux prismes l'un par rapport à l'autre.

Dans tous les cas, la cavité microlaser peut être stabilisée.

Dans le cas où le miroir de sortie est un miroir à réflexion maximum, une face polie peut être prévue sur les côtés du microlaser pour la sortie du faisceau laser.

L'élément de déclenchement à réflexion interne totale frustrée peut être directement déposé sur le milieu actif laser, ce qui évite l'introduction d'éléments de collage ou d'autres éléments optiques à l'intérieur de la microcavité laser, des pertes supplémentaires étant ainsi évitées.

Un microlaser peut comporter une microcavité laser telle que décrite ci-dessus ainsi que des moyens de pompage de cette cavité.

L'invention concerne également un procédé de réalisation de cette cavité comme défini dans la revendication 15, comportant :

- une étape de formation, sur un milieu actif laser, du micromodulateur à réflexion totale interne frustrée,
- une étape de formation de moyens pour faire varier l'épaisseur de la lame,
- une étape de formation de miroirs d'entrée et de sortie de la cavité.

La formation du micromodulateur peut comporter la formation du premier microprisme constitué du matériau d'indice $n_1$, puis la formation du second microprisme, constituée également du matériau d'indice $n_1$, chacun possédant au moins une face plane, les deux faces étant sensiblement parallèles entre elles et inclinées sur l'axe de la cavité microlaser.

En outre, peut être prévue la formation, de part et d'autre de chaque face plane, de deux autres faces planes, disposées sensiblement perpendiculairement à l'axe du microlaser.

L'étape de formation des moyens pour faire varier l'épaisseur de la lame peut intervenir après la formation du premier microprisme et avant la formation du second microprisme.

Une étape de dépôt d'un matériau de remplissage, entre les deux microprismes, peut également être prévue, ainsi qu'une étape de réalisation de moyens pour stabiliser optiquement la cavité.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1, déjà décrite, représente schématiquement un microlaser selon l'art antérieur, déclenché activement,
- la figure 2 représente la réflectivité de la deuxième cavité vue par le milieu actif laser de la première cavité dans un microlaser déclenché activement selon l'art antérieur,
- la figure 3 représente un premier dispositif conforme à la présente invention,
- les figures 4A et 4B illustrent le principe de fonctionnement d'un micromodulateur,
- les figures 5A et 5B représentent les évolutions temporelles, dans une cavité microlaser classique et dans une cavité microlaser selon l'invention, des pertes, du gain et de l'impulsion laser,
- les figures 6, 7, 8 sont d'autres exemples d'un dispositif conforme à l'invention,
- les figures 9A à 9F illustrent des étapes de fabrication d'un dispositif selon l'invention.

Description détaillée de modes de réalisation de l'invention

La figure 3 représente un premier exemple d'un microlaser déclenché, conforme à l'invention. Sur cette figure, la référence 20 désigne le milieu actif du microlaser dont le matériau de base peut être choisi parmi l'un des matériaux suivants : YAG ($Y_3Al_5O_{12}$), LMA ($LaMgAl_{11}O_{19}$), $YVO_4$, YSO ($Y_2SiO_5$), YLF ($YLiF_4$) ou $GdVO_4$, etc. Ce matériau de base est dopé, par exemple, au néodyme (Nd) pour une émission laser autour de 1,06 µm. On peut également choisir un dopage Er ou un codopage erbium-ytterbium Er+Yb pour une émission autour de 1,5 µm, ou bien un dopage Tm ou Ho ou un codopage Tm+Ho pour une émission autour de 2 µm. L'épaisseur e du milieu actif laser 20 est en pratique comprise entre 100 µm et 1 mm ou quelques millimètres.

Deux miroirs 22, 24 ferment la cavité microlaser. Le miroir d'entrée, déposé par des procédés connus, sera de préférence de type dichroïque et présente une réflectivité maximum (la plus proche possible de 100%) à la longueur d'onde du laser et une transmission la plus élevée possible (supérieure à 80%) à la longueur d'onde du faisceau de pompage (en général vers 800 nm pour les matériaux dopés Nd, vers 980 nm pour ceux dopés Er et/ou Yb, et vers 780 nm pour ceux dopés Tm).

Le miroir de sortie 24 peut être un miroir présentant une réflectivité maximum, voisine de 100%, si le dispositif est du type à extraction d'impulsion : ceci permet de supprimer une source de perte dans la cavité microlaser. Le dispositif peut également être à déclenchement actif standard, auquel cas le miroir de sortie laisse passer quelques pourcents du faisceau laser. Dans tous les cas, le miroir de sortie est avantageusement du type dichroïque.

Le pompage de la cavité est préférentiellement un pompage optique. Les diodes lasers III-V sont particulièrement bien adaptées pour pomper une cavité microlaser. Un faisceau de pompage est représenté sur la figure 3, et désigné par la référence 26, mais les moyens pour générer ce faisceau de pompage ne sont pas représentés sur cette figure.

De façon optionnelle, il est possible de fabriquer par une méthode connue selon l'art antérieur (A. EDA et al., CLEO 1992, page 282, Conference on Laser and Electrooptics, Anaheim, USA) un réseau de microlentilles en un matériau transparent (par exemple en silice) sur la surface d'entrée du matériau laser. Les dimensions typiques de ces microlentilles sont :

- diamètre de 100 à quelques microns,
- rayon de courbure de quelques centaines de micromètres à quelques millimètres.

Ces microlentilles permettent de réaliser des cavités stables du type plan concave. Une cavité stable permet de bien définir la géométrie du faisceau dans la cavité microlaser et permet d'imposer une taille de faisceau au niveau de la lame 30, inclinée d'un angle 0 par rapport à l'axe du microlaser. En fait, plus la taille du faisceau est faible au niveau de cette lame, plus faible est la hauteur à graver dans les éléments 32, 34 : cette hauteur est de l'ordre de $2Wtg\theta$, si le diamètre du faisceau est 2W. Un micromiroir est représenté sur la figure 3 et désigné par la référence 28 : la cavité microlaser représentée sur la figure 3 est donc une cavité stable, du type plan-concave. La stabilisation de la cavité permet en outre d'y diminuer les pertes et d'accroître son rendement de fonctionnement.

Le dispositif de la figure 3 comporte en outre un composant 32, constitué d'un milieu solide d'indice $n_1$. De préférence, on choisira un matériau de bonne qualité optique et d'indice pas trop faible, tel que par exemple de la silice. L'élément 32 comporte une face 36 inclinée d'un angle θ par rapport à l'axe du microlaser. L'angle θ est choisi de telle façon qu'il y ait réflexion totale du faisceau laser sur cette face. Cette dernière forme un dioptre qui sépare le milieu solide 32 et un second milieu, ou lame 30, d'indice $n_2$. En fait, l'angle d'incidence θ doit être supérieur à $\text{Arcsin}(n_2/n_1)$ pour qu'il y ait réflexion totale.

Un second élément 34, constitué du même matériau que le premier élément 32, présente également une face inclinée 38, sensiblement parallèle à la face 36 et, donc, présentant le même angle θ par rapport à l'axe du microlaser.

L'indice du milieu compris entre les deux dioptres formés par les faces inclinées 36, 38 doit être inférieur à l'indice $n_1$ des éléments solides 32, 34. L'épaisseur de la lame 30, qui sépare les deux faces 36, 38 est variable et contrôlée par des moyens commandables de l'extérieur. Cette épaisseur est de l'ordre de la moitié de la longueur d'onde du faisceau laser, afin de coupler dans le milieu radiatif le maximum d'énergie. La lame 30 est donc constituée par un milieu déformable ou fluide, le plus souvent de l'air.

Les moyens pour faire varier et contrôler la distance entre les deux faces 36, 38 peuvent être du type piézoélectrique. Sur la figure 3, des lames 44, 46 de matériau piézoélectrique sont situées dans des intervalles 40, 42, entre les deux prismes 32, 34. Ces lames 44, 46 sont orientées, dans l'exemple de la figure 3, perpendiculairement à l'axe du microlaser. D'autres dispositions sont possibles, dans la mesure où l'activation des éléments piézoélectriques permet d'aboutir à l'écartement ou au rapprochement des faces parallèles 36, 38 de la lame 30. De part et d'autre des éléments piézoélectriques 44, 46 sont disposés des électrodes de commande 48, 50, 52, 54. Ces électrodes sont reliées par des éléments de contact à des moyens permettant d'imposer aux éléments piézoélectriques une certaine tension de polarisation (ces moyens ne sont pas représentés sur la figure 3). De façon avantageuse, on choisit pour matériau piézoélectrique un matériau ayant un coefficient de tenseur piézoélectrique $d_{15}$ important, par exemple supérieur à $10^{-7}$m/V. On peut également prendre un matériau ayant un coefficient d31 important. Un tel choix permet d'imposer plus aisément un certain déplacement, suivant une direction perpendiculaire à l'axe du microlaser (cette direction est repérée sur la figure 3 par une flèche désignée par la référence 56) : en effet, les électrodes 48, 50 sont espacées d'une distance égale à l'épaisseur e du matériau 44, et cette distance est faible en comparaison de la largeur E de ce même matériau.

Lorsque le miroir de sortie est à réflexion totale, le faisceau laser 58 émis par le microlaser s'échappe par une face latérale 60 du dispositif. Elle est représentée parallèlement à l'axe du microlaser sur la figure 3, mais son orientation dépend de l'angle θ d'inclinaison de la lame 30 par rapport à cet axe. En outre, cette face latérale 60 est de préférence polie, de façon à favoriser une extraction optimum du faisceau laser.

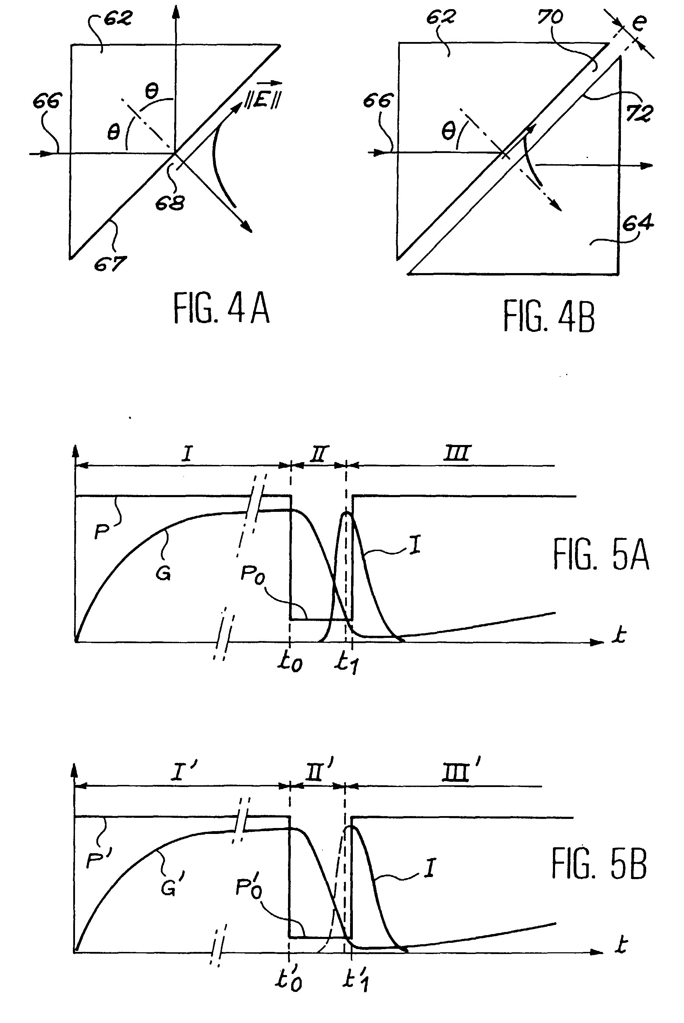

Le principe de fonctionnement d'un dispositif conforme à l'invention, c'est-à-dire le déclenchement par réflexion totale interne frustrée va être expliqué en liaison avec les figures 4A et 4B. Sur ces figures, le modulateur est représenté schématiquement par deux prismes isocèles 62, 64 identiques, assemblés par leur hypoténuse de façon à former un cube. Les deux prismes sont séparés par une lame d'air 70 très mince, de l'ordre de la longueur d'onde du faisceau laser. Le faisceau laser 66 entre par un petit côté du premier prisme 62, le traverse jusqu'à son hypoténuse et vient en incidence sur la face 67 avec un angle θ. Lorsque les deux prismes 62, 64 sont suffisamment éloignés (le prisme 64 n'est pas représenté sur la figure 4A) le faisceau 66 est totalement réfléchi par la face 67 et est entièrement dévié d'un angle θ par rapport à la normale à cette face. Par conséquent, lorsque le modulateur est placé dans la cavité microlaser, le faisceau est alors dévié hors de la cavité, ce qui représente une perte de 100%.

En fait, dans l'espace 68 situé au-delà de la face 67, le champ a une forme évanescente de type exp $(-z/z_0)$ avec

$$z_0 = \frac{\lambda_0}{2\pi}\left(n_1^2 \sin^2 \theta - n_2^2\right)^{-\frac{1}{2}},$$

où $\lambda_0$ est la longueur d'onde dans le vide (voir Optics Letters, vol. 17, N°5, pp. 378-380), et où z désigne l'éloignement par rapport à la face 67. Par conséquent, l'énergie est répartie dans l'espace juste derrière le dioptre, mais ne se propage pas au-delà. Si on approche le second prisme 64 (figure 4B) on diminue l'épaisseur de la lame d'air 70, et le dioptre de la grande face 72 du second prisme 64 s'approche de l'onde évanescente. Une partie de l'énergie de cette onde évanescente va se retrouver au contact du second dioptre et va le traverser. L'onde reprend une forme radiative dans le milieu 64 et elle continue à se propager comme elle le faisant dans le premier prisme 62. Le modulateur est alors à l'état passant et il impose un niveau de perte quasiment nul dans la cavité. A la limite, le second prisme peut venir au contact du premier, la lame d'air 70 disparaît et le faisceau passe sans rencontrer d'interface. Ce cas limite est idéal, car la qualité des surfaces 67, 72 n'est jamais suffisante pour réaliser un contact total entre elles.

Sur les figures 5A et 5B sont représentées les évolutions temporelles et les différents régimes des niveaux de perte et de gain d'une cavité microlaser déclenchée activement, ainsi qu'une impulsion laser obtenue par déclenchement de la cavité.

Le schéma de la figure 5A correspond au cas de la cavité microlaser avec un déclenchement actif classique. Au cours d'une première phase I le système ne présente pas d'effet laser, car le niveau de perte P à l'intérieur de la microcavité est supérieur au gain G obtenu par pompage. Cependant, ce gain augmente, car le milieu amplificateur solide stocke l'énergie du faisceau de pompage. La commutation des moyens de déclenchement actif, par exemple l'application d'une tension suffisante de chaque côté d'un matériau électrooptique (figure 1), permet de ramener les pertes P à un niveau bas ou nul $P_0$, et le gain G de la microcavité se trouve alors très supérieur aux pertes $P_0$ (phase II sur la figure 5A). Comme le gain est très supérieur aux pertes, l'amplification de la lumière est forte et elle continue tant que la condition $G>P_0$ est satisfaite. Lorsque le gain atteint la valeur des pertes (instant $t_1$ sur la figure 5A) l'amplification cesse, mais une valeur d'intensité laser très élevée est atteinte, d'où l'émission de l'impulsion laser I au travers du miroir de sortie. Puis, cette intensité décroît au rythme des photons qui s'échappent de la microcavité, à cause des pertes résiduelles et de la transmission du miroir de sortie (phase III : les pertes sont revenues à un niveau élevé). Enfin, le gain recommence à augmenter sous l'effet du pompage du matériau amplificateur et le cycle peut recommencer.

Dans le cas d'un dispositif conforme à la présente invention (figure 5B), l'épaisseur de la lame inclinée est tout d'abord grande (de l'ordre de plusieurs fois la longueur d'onde du laser), de sorte que les pertes P' empêchent le fonctionnement du laser. Cependant, au cours de cette phase I', le milieu amplificateur absorbe la puissance de pompe et le gain G' augmente. Au cours de l'étape II' les deux composants du micromodulateur sont rapprochés (épaisseur de la lame réduite à une fraction de longueur d'onde du microlaser) et la lumière peut traverser la lame mince entre les deux prismes. Le micromodulateur est ouvert et les pertes sont réduites aux pertes résiduelles $P'_0$. L'intensité lumineuse I' remonte alors dans la cavité tandis que le gain G' diminue. Puis, comme dans le cas précédent, l'intensité se stabilise et commence à décroître sous l'effet des pertes résiduelles. Cependant, au contraire du schéma précédent, aucune impulsion lumineuse n'est émise. Au cours d'une troisième phase III', les deux composants sont à nouveau éloignés (instant $t'_1$) et le micromodulateur est fermé. Le faisceau qui s'est formé dans la cavité va être réfléchi totalement sur la face inclinée 36 du prisme 32 (figure 3) et l'énergie va être intégralement transmise à l'extérieur du microlaser. Puis, une fois que la cavité est vidée, le cycle recommence et le gain G' croît de nouveau.

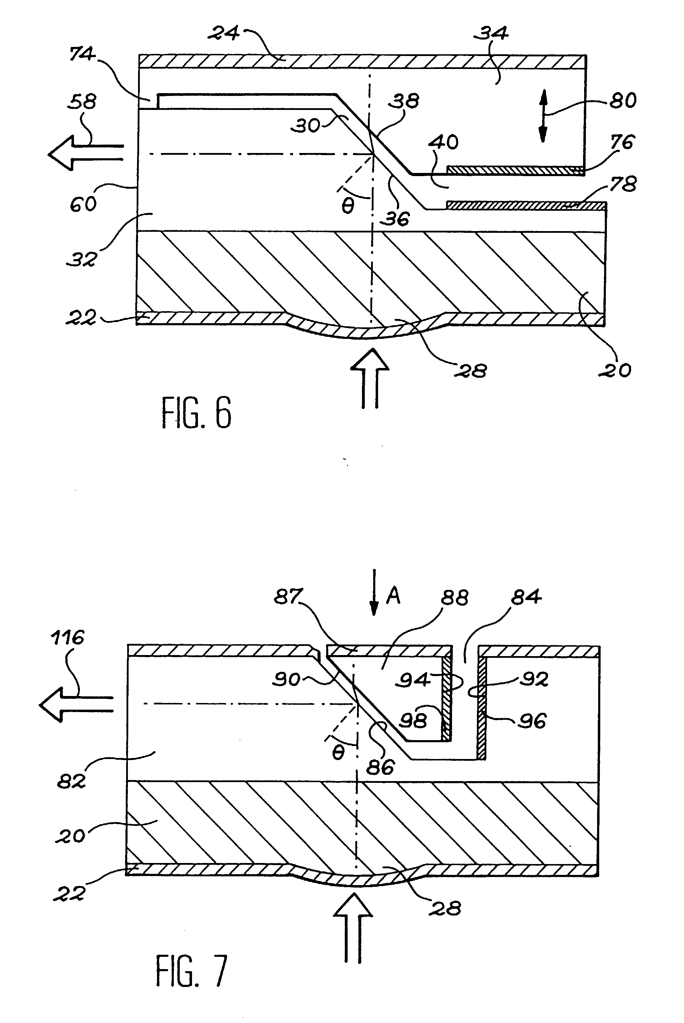

Un autre dispositif conforme à l'invention va être décrit en liaison avec la figure 6. Sur cette figure, on retrouve des références numériques identiques à celles de la figure 3, qui désignent les mêmes éléments. Les deux prismes 32, 34 sont reliés en un point 74, tandis que le système de commande est du type électrostatique. Ce dernier comporte deux électrodes 76, 78, avantageusement disposées en surface des deux prismes 32, 34, de part et d'autre de l'intervalle 40. Ces électrodes 76, 78 sont reliées à des moyens permettant de leur appliquer une différence de tension suffisante pour les rapprocher ou les éloigner l'une de l'autre, ce qui entraîne un mouvement du prisme 34 dans la direction repérée sur la figure 6 par la référence 80, c'est-à-dire essentiellement de manière parallèle à l'axe du microlaser. Ce mouvement entraîne le rapprochement des faces 36, 38 et ramène l'épaisseur de la lame 30 à une valeur quasiment nulle dans la zone d'incidence du faisceau laser sur la face 36. Le dispositif fonctionne alors de la manière décrite ci-dessus en liaison avec les figures 4A, 4B et 5B. Il y a émission d'un faisceau laser 58 par une face latérale 60 du microlaser. Ce mode de réalisation présente l'avantage de la simplicité par rapport au mode de réalisation de la figure 3.

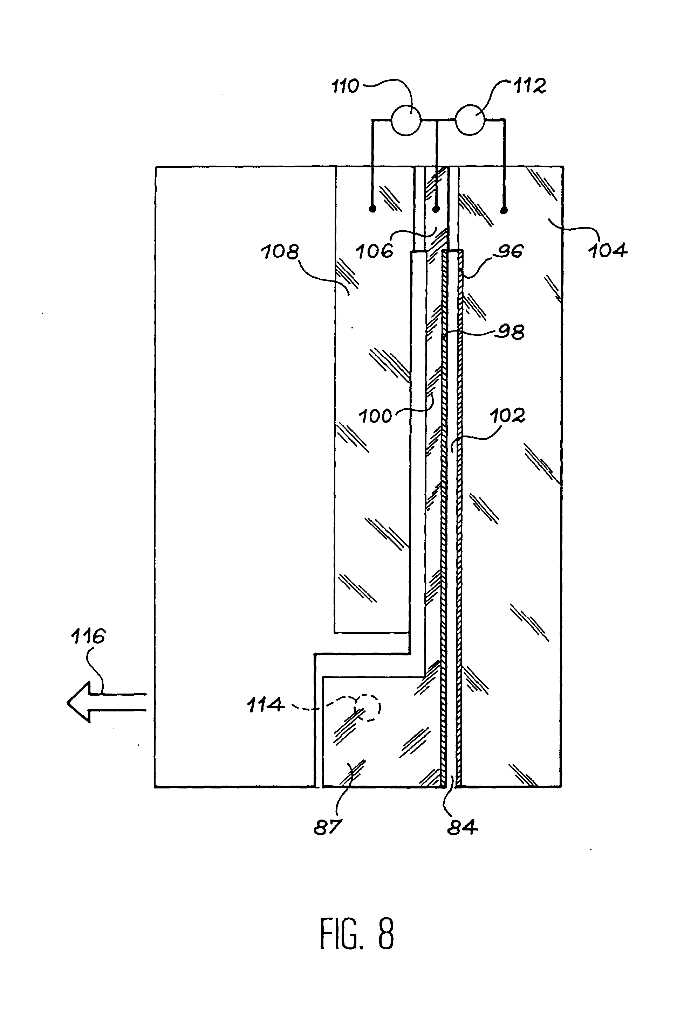

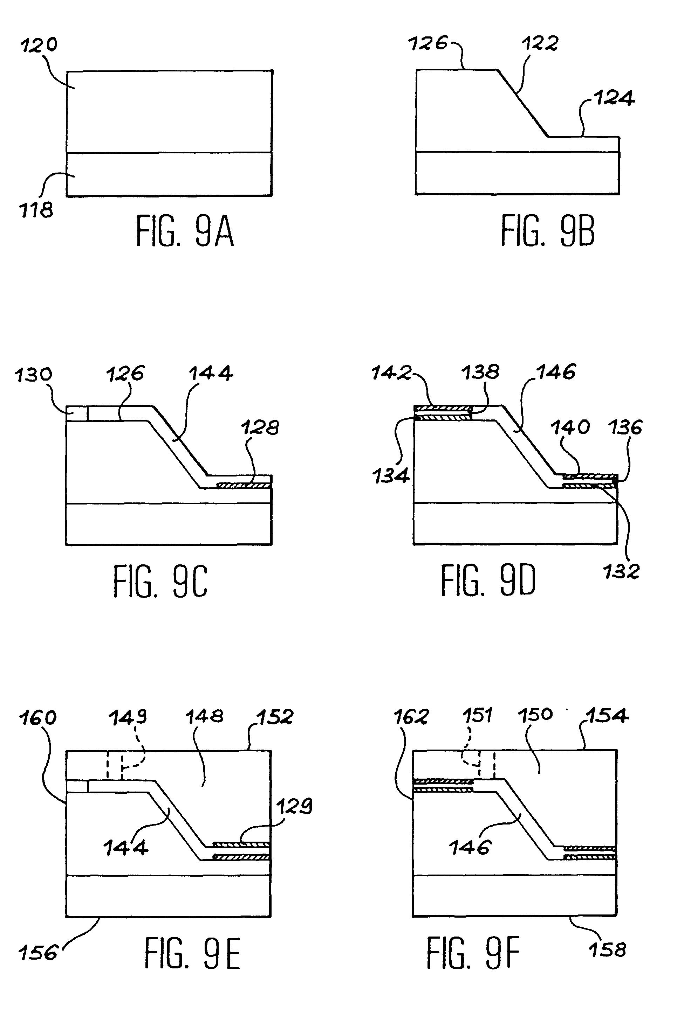

Une variante de ce second mode de réalisation (déplacement d'un second prisme avec des moyens électrostatiques) va être décrite en liaison avec les figures 7 et 8. Sur ces figures, la référence 82 désigne un premier prisme, constitué d'un matériau choisi de préférence selon les mêmes critères que ceux déjà exposés ci-dessus en liaison avec la description de la figure 3 (une bonne qualité optique et indice pas trop faible). Une cavité 84 est ouverte dans ce prisme 82, de telle façon que ce dernier présente une face inclinée 86, faisant un angle $\theta$ avec la direction du microlaser. Dans la cavité 84 vient se loger un second prisme 88 présentant une surface 90 parallèle à la surface 86. Chacun des prismes 82, 88 possède également une face 92, 94 sur laquelle est déposée une électrode de commande 96, 98. Le fonctionnement de ce dispositif est le même que celui du dispositif décrit ci-dessus en liaison avec la figure 6, l'espacement entre les faces 86, 90 étant commandé par la tension appliquée aux électrodes 96, 98. Vue du côté du miroir de sortie (c'est-à-dire suivant la direction A sur la figure 7), cette variante peut présenter l'aspect illustré sur la figure 8. Le prisme mobile 88 et le miroir de sortie 87 sont disposés à l'extrémité d'une micropoutre 100, l'électrode de commande 98 pouvant être déposée au moins en partie le long de cette micropoutre. L'électrode 96 est alors disposée sur les parois d'une échancrure 102 qui prolonge l'ouverture 84 et à l'intérieur de laquelle la micropoutre peut se déplacer, sous l'action des tensions appliquées aux électrodes 96, 98. Des zones métallisées 104, 106, 108, isolées les unes des autres, permettent d'appliquer à ces électrodes les tensions voulues à l'aide de générateurs 110, 112 de tension. Sur cette figure 8 est également représenté la trace 114 du faisceau de pompage du milieu actif laser. Lorsque le miroir de sortie 87 est à réflexion maximum le faisceau laser 116 est extrait latéralement de la microcavité laser.

Un procédé de fabrication de microlasers, tel que décrit ci-dessus en liaison avec les figures 3 et 6, va maintenant être décrit. Pour la réalisation d'autres configurations de la cavité microlaser, l'homme du métier saura adapter les différentes étapes décrites ci-dessous.

1°) - Dans une première étape, des lames d'un matériau laser sont découpées. Elles serviront de substrat pour les dépôts suivants et elles sont éventuellement orientées selon des axes cristallographiques donnés. Ces lames sont polies sur les deux faces, avec une qualité laser.

2°) - Comme illustré sur la figure 9A, un dépôt d'une couche 120 de silice épaisse (plusieurs dizaines de microns d'épaisseur) est réalisé sur une lame 118 obtenue lors de la première étape. Un plan incliné 122 (figure 9B) est gravé, en utilisant un masque à densité variable ou un masque mobile. Il est également possible de graver un plan cristallographique révélé par attaque chimique, si on dépose une couche 120 monocristalline d'un autre matériau que la silice. On peut aussi réaliser le plan incliné par emboutissage à chaud de la silice. Des parties basse 124 et haute 126 sont obtenues, de part et d'autre du plan incliné 122.

3°) - Dans le cas d'un actionneur électrostatique, une électrode métallique 128 est déposée sur la partie basse horizontale 124, à côté du plan incliné. Un plot 130 de silice est gravé ou déposé sur la partie haute 126 : ce plot servira de pivot lors du mouvement de la partie mobile en silice.

Dans le cas d'un actionneur piézoélectrique, des électrodes 132, 134 sont déposées sur les surfaces 124, 126. Sur ces électrodes est ensuite réalisé un dépôt d'un matériau piézoélectrique 136, 138, possédant par exemple un coefficient de tenseur piézoélectrique $d_{15}$ important. Puis, une seconde électrode 140, 142 est déposée sur le matériau piézoélectrique.

Les dépôts réalisés mettent en oeuvre les techniques de masquage et de gravure qui permettent d'obtenir une forme d'actionneur bien définie.

4°) - Dans les deux cas décrits ci-dessus, un matériau de remplissage 144, 146, par exemple une résine est ensuite déposée par exemple à la tournette. L'épaisseur de ce dépôt correspond à l'épaisseur, de l'ordre du micromètre, de la lame d'air que l'on souhaite laisser entre les deux faces inclinées des prismes. Dans le cas d'un actionneur électrostatique une seconde électrode 129 (figure 9E) est ensuite déposée en face de la première électrode 128.

5°) - Un dépôt épais 148, 150 du matériau constitutif du second prisme (par exemple de la silice) est ensuite réalisé sur la couche de résine 144, 146 (figures 9E, 9F). Un trou 149, 151 est prévu et réalisé par masquage, afin de permettre d'avoir ensuite accès à la résine.

6°) - La résine 144, 146 est attaquée chimiquement, afin de laisser une lame d'air entre les deux prismes constitutifs du déclencheur.

7°) - La face supérieure 152, 154 est ensuite planarisée et polie avec une qualité laser. Des miroirs sont déposés sur la face d'entrée 156, 158 du matériau laser et sur la face de sortie 152, 154 du second prisme 148, 150. Ces miroirs sont plans si on veut réaliser une cavité microlaser plan-plan. Une cavité microlaser stable peut être réalisée en gravant des micromiroirs sur la face d'entrée 156, 158.

Les puces microlasers sont découpées, des prises de contact sont réalisées pour la commande des actionneurs piézoélectriques ou électrostatiques. Une face latérale 160, 162 peut être polie, avec une qualité optique, pour laisser sortir le faisceau du laser.

La cavité ainsi obtenue peut être montée en boîtier, et couplée à une diode de pompage, par exemple par l'intermédiaire d'une fibre optique.

Toutes les étapes du procédé décrit ci-dessus sont compatibles avec une fabrication collective des microlasers, donc avec une fabrication à faible coût.

Afin de réaliser un dispositif comme celui de la figure 7, on réalisera des étapes de gravure pour obtenir des formes différentes des prismes, mais toutes les techniques évoquées ci-dessus peuvent être utilisées et adaptées à la réalisation d'un tel dispositif. Il en va de même pour toute autre forme de prisme.

## Revendications

1. Cavité microlaser monolithique à déclenchement actif, comportant :

   - un milieu actif laser (20), un miroir d'entrée (22) et un miroir de sortie (24, 87) délimitant la cavité,
   - un micromodulateur à réflexion totale interne frustrée, comportant deux microprismes (32, 34) constitués d'un certain matériau d'indice $n_1$ possédant chacun au moins une face plane (36, 38), les deux faces planes étant sensiblement parallèles entre elles et inclinées sur l'axe de la cavité microlaser, définissant ainsi une lame (30) d'un certain matériau d'indice $n_2$ inférieur à $n_1$,
   - des moyens (44, 46, 48, 50, 52, 54) pour faire varier l'épaisseur de la lame.

2. Cavité microlaser selon la revendication 1, les moyens pour faire varier l'épaisseur de la lame étant essentiellement situés entre les deux microprismes.

3. Cavité microlaser selon l'une des revendications 1 ou 2, les deux faces sensiblement parallèles entre elles et inclinées sur l'axe du laser étant chacune prolongées, de part et d'autre, par deux faces planes, disposées sensiblement perpendiculairement à l'axe de la cavité du microlaser.

4. Cavité microlaser selon l'une des revendications 1 à 3, les moyens pour faire varier l'épaisseur de la lame étant des moyens piézoélectriques.

5. Cavité microlaser selon la revendication 4, les moyens piézoélectriques comportant au moins un cristal piézoélectrique (44, 46) essentiellement situé dans l'intervalle (40, 42) entre les deux prismes.

6. Cavité microlaser selon la revendication 5, des électrodes de polarisation (48, 50, 52, 54) du cristal piézoélectrique étant positionnées de part et d'autre de ce cristal, chacune de ces électrodes étant située sur une face ou en surface d'un des deux prismes.

7. Cavité microlaser selon l'une des revendications 4 à 6, le matériau piézoélectrique ayant un coefficient de tenseur piézoélectrique $d_{15}$ important.

8. Cavité microlaser selon l'une des revendications 1 à 3, les moyens pour faire varier l'épaisseur de la lame étant des moyens électrostatiques (76, 78, 96, 98).

9. Cavité microlaser selon la revendication 8, les deux prismes étant reliés par au moins un point fixe (74), les moyens électrostatiques comportant deux électrodes (76, 78, 96, 98), chacune étant positionnée sur une face ou en surface (92, 94) d'un des deux prismes.

10. Cavité microlaser selon la revendication 9, l'un des deux prismes étant muni d'une micropoutre sur une partie de laquelle une des électrodes (98) est au moins partiellement déposée.

11. Cavité microlaser selon l'une des revendications précédentes, la cavité étant stabilisée.

12. Cavité microlaser selon l'une des revendications précédentes, le miroir de sortie (24, 87) de la cavité étant un miroir à réflexion maximum, une face polie (60) étant par ailleurs prévue sur les côtés du microlaser pour la sortie du faisceau laser (58, 116).

13. Cavité microlaser selon l'une des revendications précédentes, le micromodulateur étant directement déposé sur le milieu actif laser.

14. Microlaser comportant une cavité microlaser selon l'une des revendications précédentes et des moyens optiques de pompage de la cavité.

15. Procédé de fabrication d'une cavité microlaser monolithique à déclenchement actif, comportant :

    - une étape de formation, sur un milieu actif laser (118), d'un micromodulateur à réflexion totale interne frustrée,
    - comportant deux microprismes constitués d'un certain matériau d'indice $n_1$ possédant chacun au moins une face plane (122), les deux faces planes étant sensiblement parallèles entre elles et inclinées sur l'axe de la cavité microlaser, définissant ainsi une lame (30) d'un certain matériau d'indice $n_2$ inférieur à $n_1$,
    - une étape de formation de moyens (132, 134, 136, 138, 140, 142) pour faire varier l'épaisseur de la lame,
    - une étape de formation de miroirs d'entrée et de sortie de la cavité.

16. Procédé selon la revendication 15, la formation du micromodulateur comportant la formation du premier microprisme constitué du matériau d'indice $n_1$, puis la formation du second microprisme (148, 150), constitué également du matériau d'indice $n_1$, chacun possédant au moins une face plane (122), les deux faces étant sensiblement parallèles entre elles et inclinées sur l'axe de la cavité microlaser.

17. Procédé selon la revendication 16, comportant en outre la formation, de part et d'autre de chaque face plane, de deux autres faces planes (126, 124), disposées sensiblement perpendiculairement à l'axe du microlaser.

18. Procédé selon l'une des revendications 16 ou 17, l'étape de formation des moyens pour faire varier l'épaisseur de la lame intervenant après la formation du premier microprisme et avant la formation du second microprisme.

19. Procédé selon l'une des revendications 16 à 18, comportant également une étape de dépôt d'un matériau de remplissage (144, 146) entre les deux microprismes.

20. Procédé selon l'une des revendications 15 à 19, comportant en outre une étape de réalisation de moyens pour stabiliser optiquement la cavité.

**Patentansprüche**

1. Festkörper-Mikrolaser mit aktiver Güteschaltung, umfassend:

   - ein aktives Lasermedium (20), einen Eingangsspiegel (22) und einen den Resonator abgrenzenden Ausgangsspiegel (24, 87),
   - einen Mikromodulator mit frustrierter bzw. im Wege stehender, interner Totalreflexion, zwei Mikroprismen (32, 34) aus einem bestimmten Material mit der Brechzahl $n_1$ umfassend, von denen jeder wenigstens eine ebene Fläche (36, 38) aufweist, wobei die beiden ebenen Flächen im wesentlichen parallel zueinander und schräg zur Achse des Mikrolaserresonators sind und derart einen Spalt (30) aus einem bestimmten Material bzw. Medium mit der Brechzahl $n_2$ kleiner als $n_1$ bilden,
   - Einrichtungen (44, 46, 48, 50, 52, 54) um die Dicke des Spalts zu variieren.

2. Mikrolaserresonator nach Anspruch 1, wobei die Einrichtungen zum Variieren der Dicke des Spalts sich im wesentlichen zwischen den beiden Mikroprismen befinden.

3. Mikrolaserresonator nach einem der Ansprüche 1 oder 2, wobei jede der beiden im wesentlichen parallelen und bezüglich der Achse des Mikrolaserresonators schrägen Flächen auf beiden Seiten durch zwei ebene Flächen verlängert wird, die im wesentlichen senkrecht zu der Achse des Mikrolaserresonators angeordnet sind.

4. Mikrolaserresonator nach einem der Ansprüche 1 bis 3, wobei die Einrichtungen zum Variieren der Dicke des Spalts piezoelektrische Einrichtungen sind.

5. Mikrolaserresonator nach Anspruch 4, wobei die piezoelektrischen Einrichtungen wenigstens einen piezoelektrischen Kristall (44, 46) umfassen, im wesentlichen in dem Zwischenraum (40, 42) zwischen den beiden Prismen befindlich.

6. Mikrolaserresonator nach Anspruch 5, wobei Vorspannungselektroden (48, 50, 52, 54) des piezoelektrischen Kristalls auf beiden Seiten dieses Kristalls angeordnet sind und jede dieser Elektroden sich auf einer Seite oder einer Fläche eines der beiden Prismen befindet.

7. Mikrolaserresonator nach einem der Ansprüche 4 bis 6, wobei das piezoelektrische Material einen großen piezoelektrischen Tensorkoeffizienten $d_{15}$ hat.

8. Mikrolaserresonator nach einem der Ansprüche 1 bis 3, wobei die Einrichtungen zum Variieren der Dicke des Spalts elektrostatische Einrichtungen (76, 78, 96, 98) sind.

9. Mikrolaserresonator nach Anspruch 8, wobei die beiden Prismen durch wenigstens einen festen Punkt (74) verbunden sind, die elektrostatischen Einrichtungen zwei Elektroden (76, 78, 96, 98) umfassen, von denen jede auf einer Seite oder an der Oberfläche (92, 94) eines der beiden Prismen angeordnet ist.

10. Mikrolaserresonator nach Anspruch 9, wobei das eine der beiden Prismen mit einer Mikrosäule versehen ist, auf einem Teil von der eine der Elektroden (98) wenigstens partiell abgeschieden ist,.

11. Mikrolaserresonator nach einem der vorangehenden Ansprüche, wobei der Resonator stabilisiert ist.

12. Mikrolaserresonator nach einem der vorangehenden Ansprüche, wobei der Ausgangsspiegel (24, 87) des Resonators ein Spiegel mit maximaler Reflexion ist und außerdem auf den Seiten des Mikrolasers für den Austritt des Laserstrahls (58, 116) eine polierte Fläche (60) vorgesehen ist.

13. Mikrolaserresonator nach einem der vorangehenden Ansprüche, wobei der Mikromodulator direkt auf dem aktiven Lasermedium abgeschieden wird.

14. Mikrolaser mit einem Mikrolaserresonator nach einem der vorangehenden Ansprüche und optischen Pumpeinrichtungen des Resonators.

15. Verfahren zur Herstellung eines Festkörper-Mikrolasers mit akiver Güteschaltung, umfassend:

- einen Schritt, um auf einem aktiven Lasermedium (118) einen Mikromodulator mit frustrierter bzw. im Wege stehender, interner Totalreflexion auszubilden, zwei Mikroprismen aus einem bestimmten Material mit der Brechzahl $n_1$ umfassend, von denen jeder wenigstens eine ebene Fläche (122) aufweist, wobei die beiden ebenen Flächen im wesentlichen parallel zueinander und schräg zur Achse des Mikrolaserresonators sind und derart einen Spalt aus einem bestimmten Material bzw. Medium mit der Brechzahl $n_2$ kleiner als $n_1$ bilden,
- einen Schritt zur Bildung von Einrichtungen (132, 134, 136, 138, 140, 142), um die Dicke des Spalts zu variieren,
- einen Schritt zur Bildung des Eingangs- und des Ausgangsspiegels des Resonators.

16. Verfahren nach Anspruch 15, wobei die Bildung des Mikromodulators die Bildung des ersten Mikroprismas aus einem Material mit der Brechzahl $n_1$ und die Bildung des zweiten Mikroprismas (148, 150) ebenfalls aus einem Material mit der Brechzahl $n_1$ umfaßt, von denen jedes wenigstens eine ebene Fläche (122) aufweist und die beiden Flächen im wesentlichen parallel zueinander und schräg zur Achse des Mikrolaserresonators sind.

17. Verfahren nach Anspruch 16, das außerdem auf jeder Seite jeder ebenen Fläche zwei weitere ebene Flächen (126, 124) umfaßt, die im wesentlichen senkrecht zur Achse des Mikrolasers angeordnet sind.

18. Verfahren nach einem der Ansprüche 16 oder 17, wobei der Schritt zur Bildung der Einrichtung zum Variieren der Dicke des Spalts nach der Bildung des ersten Mikroprismas und vor der Bildung des zweiten Mikroprismas erfolgt.

19. Verfahren nach einem der Ansprüche 16 bis 18, das auch einen Schritt zum Aufbringen eines Füllmaterials (144, 146) zwischen den beiden Mikroprismen umfaßt.

20. Verfahren nach einem der Ansprüche 15 bis 19, das außerdem einen Schritt zur Realisierung von Einrichtungen zum optischen Stabilisieren des Resonators umfaßt.

**Claims**

1. Monolithic microlaser cavity with active Q-switching comprising:

   - an active laser medium (20), an input mirror (22) and an output mirror (24, 87) defining the cavity,
   - a micromodulator with frustrated total internal reflection, comprising two microprisms (32, 34) made of a certain material of index $n_1$ each having at least one planar face (36, 38), the two planar faces being approximately parallel to each other and inclined onto the microlaser cavity axis, thereby defining a plate (30) of a certain material of index $n_2$ less than $n_1$,
   - means (44, 46, 48, 50, 52, 54) for varying the thickness of the plate.

2. Microlaser cavity according to claim 1, the means for varying the thickness of the plate being essentially situated between the two microprisms.

3. Microlaser cavity according to one of the claims 1 or 2, the two faces which are approximately parallel to each other and inclined on the laser axis being each extended on both sides by two planar faces positioned approximately perpendicular to the microlaser cavity axis.

4. Microlaser cavity according to one of the claims 1 to 3, the means for varying the thickness of the plate being piezoelectric means.

5. Microlaser cavity according to claim 4, the piezoelectric means comprising at least one piezoelectric crystal (44, 46) essentially situated in the gap (40, 42) between the two prisms.

6. Microlaser cavity according to claim 5, the polarization electrodes (48, 50, 52, 54) of the piezoelectric crystal being positioned on either side of this crystal, each of these electrodes being situated on a face or on the surface of one of the two prisms.

7. Microlaser cavity according to one of the claims 4 to 6, the piezoelectric material having a high coefficient of piezoelectric tensor $d_{15}$.

8. Microlaser cavity according to one of the claims 1 to 3, the means for varying the thickness of the plate being electrostatic means (76, 78, 96, 98).

9. Microlaser cavity according to claim 8, the two prisms being connected through at least one fixed point (74), the electrostatic means comprising two electrodes (76, 78, 96, 98), each being positioned on a face or on the surface (92, 94) of one of the two prisms.

10. Microlaser cavity according to claim 9, one of the two prisms being fitted with a microbeam on a part of which one of the electrodes (98) is at least partially deposited.

**11.** Microlaser cavity according to one of the preceding claims, the cavity being stabilized.

**12.** Microlaser cavity according to one of the preceding claims, the output mirror (24, 87) of the cavity being a maximum reflection mirror, a polished face (60) being additionally provided, on the sides of the microlaser for the output of the laser beam (58, 116).

**13.** Microlaser cavity according to one of the preceding claims, the micromodulator being deposited directly on the active laser medium.

**14.** Microlaser comprising a microlaser cavity according to one of the preceding claims, and cavity optical pumping means.

**15.** Method of manufacturing a monolithic microlaser cavity with active Q switching comprising:

- a step of forming, on an active laser medium (118), a micromodulator with frustrated total internal reflection, comprising two microprims made from a certain material of index $n_1$, each having at least one planar face (122), the two planar faces being substantially parallel to one another and inclined to the axis of the microlaser cavity, thus defining a plate (30) made from a certain material of index $n_2$ lower than $n_1$,
- a step of forming means (132, 134, 136, 138, 140, 142) to vary the thickness of the plate,
- a step of forming the input and output mirrors of the cavity.

**16.** Method according to claim 15, the formation of the micromodulator comprising the forming of the first microprism made of the material of index $n_1$, then the forming of the second microprism (148, 150) also made of the material of index $n_1$, each having at least one planar face (122), the two faces being approximately parallel to each other and inclined on the microlaser cavity axis.

**17.** Method according to claim 16, comprising, in addition, the forming on both sides of each planar face, of two other planar faces (126, 124), positioned substantially perpendicular to the microlaser axis.

**18.** Method according to one of the claims 16 or 17, the step of forming the means for varying the thickness of the plate occurring after the forming of the first microprism and before the forming of the second microprism.

**19.** Method according to one of the claims 16 to 18, also comprising a step of depositing a core material (144, 146) between the two microprisms.

**20.** Method according to one of the claims 15 to 19, comprising, in addition, a step of producing means for optically stabilizing the cavity.

FIG. 1

FIG. 2

FIG. 3

FIG. 4 A

FIG. 4B

FIG. 5A

FIG. 5B

FIG. 6

FIG. 7

FIG. 8

FIG. 9A

FIG. 9B

FIG. 9C

FIG. 9D

FIG. 9E

FIG. 9F

16